# EUROPEAN PATENT APPLICATION

(11) **EP 4 092 459 A1**
(43) Date of publication of application: **23.11.2022**
(21) Application number: 22173935.2
(22) Date of filing: 18.05.2022
(51) Int. Cl.: G02B 6/44

(54) **FIBER OPTIC CABLE DISPENSING KIT**

(30) Priority: 20.05.2021 IT 202100013142
(71) Applicant: Prysmian S.p.A., 20126 Milano (IT)
(72) Inventor: LE DISSEZ, Arnaud, 20126 MILANO (IT); FERRER, Jean Paul, 20126 Milano (IT)
(74) Representative: Cevini, Gaia

(57) **Abstract**

It is disclosed a fiber optic cable dispensing kit comprising a box with a substantially cubic shape. The kit further comprises, inside the box: a fiber optic cable length wound on a reel, a connector assembly attached to an end of the fiber optic cable, the connector assembly being fixed at a sidewall of the reel, and a fixing device to fix the connector assembly to a wall.

## Description

### Technical field

The present invention relates to the field of fiber optic cable dispensing kits. In particular, the present invention relates to a fiber optic cable dispensing kit for, notably - but not exclusively - optical access networks such as FTTH (Fiber To The Home) networks.

### Background art

For FTTH (Fiber To The Home) applications, a length of a drop cable is usually wound onto a cardboard reel which is provided in a cardboard box. The cable can typically be spooled out directly from an opening in the box. In particular, the FTTH drop cable is typically pre-terminated at an end thereof with a connector assembly such as a Compact Termination Box (CTB) with, for instance, SC/APC (Subscriber Connector/Angle Polished Connector) connectors. The CTB is supplied in the same cardboard box. When installing the drop cable at the user premises, typically the cable is pulled out of the box before installation and the CTB can be secured to the wall by means of a fixing device such as a fixing bracket. The fixing device can be provided within the same cardboard box.

The known pre-terminated CTB MK3 kit comprises a CTB supplied with the required cable length wound on a cardboard reel (https://www.prysmiangroup.com/en/en_telecom-solutions_optical-connectivity_racks-and-rack-mounted_wall-mounted-racks_WM072-01.html). The components of the kit are enclosed in a cardboard box together with fixing means.

### Summary of the invention

The Applicant has tackled the problem of providing an optical fiber cable dispensing kit for dispensing a fiber optic cable which allows reducing the volume occupied by the cardboard box with respect to the pre-terminated CTB MK3 kit cited above so as to increase the number of kits per palette which can be stored and transported.

The inventors surprisingly found that the problem above may be solved by providing a fiber optic cable dispensing kit comprising a box, e.g. a cardboard box, with a substantially cubic shape and the following components (housed inside the box):
- a fiber optic cable length wound on a reel, e.g. a cardboard reel;
- a connector assembly (e.g. a CTB) attached to an end of the fiber optic cable; and
- a fixing device to fix the connector assembly to a wall.

The components are assembled in the box in such a way as to optimize the dimensions of the fiber optic cable dispensing kit. This allows also to reduce the amount of packaging material to be disposed. In particular, the components cited above are contained in two storage portions formed in the box by means of an internal wall. This configuration allows to, upon installation of the fiber optic cable, extract the fixing device from the box without accessing the fiber optic cable and without disassembling the box, and use the box as an unroller to directly uncoil the fiber optic cable from it.

A further advantage of the kit of the present invention is as follows: while the known pre-terminated CTB MK3 kit is configured to be used in a vertical position when uncoiling the fiber optic cable (namely, by positioning the box so that the axis of the reel is parallel to the plane on which the box is positioned), the kit of the present invention allows uncoiling the fiber optic cable regardless of the relative position of the reel axis and the plane.

In the following description and in the claims, the expression "box with a substantially cubic shape" will indicate that the box of the fiber optic cable dispensing kit of the present invention has six faces, each face having four edges, wherein each edge has a length that may vary by a maximum of 10% with respect to a nominal value. For instance, if the nominal value of the edge of the box is 130 mm, the length of each edge may vary between 117 mm and 143 mm. In this example, an edge could have a length of 120 mm while another edge could have a length of 130 mm.

In an aspect, the present invention relates to a fiber optic cable dispensing kit comprising a box with a substantially cubic shape, the fiber optic cable dispensing kit further comprising, inside the box:
- a fiber optic cable length wound on a reel;
- a connector assembly attached to an end of the fiber optic cable, the connector assembly being fixed at a sidewall of said reel; and
- a fixing device to fix the connector assembly to a wall.

According to embodiments of the present invention, the reel comprises a cylindrical body and a flange attached to an end of the cylindrical body and the connector assembly is fixed to the flange, on the outer side thereof.

According to embodiments of the invention, the box comprises, in one of its walls, a removable portion, the fixing device being attached to the one of its wall on an inner surface thereof at the position of the first removable portion.

According to embodiments of the invention, the box comprises, in one of its walls, a slot through which the fiber optic cable can be spooled out directly from the box. According to these embodiments of the invention, the box may comprise, in the one of its walls, a removable tab whose removal leaves the slot in the one of its walls, and a second end of the fiber optic cable is attached on an inner surface of the one of its walls at the position of the removable tab.

According to embodiments of the invention, the reel has a hole or a groove on the edge of the flange to allow the passage of the fiber optic cable that is connected to the connector assembly.

According to embodiments of the invention, the box encloses a first storage portion and at least one second storage portion divided by at least one internal wall having substantially the same shape of a lateral wall of the box, and the first storage portion houses the fiber optic cable length wound on the reel and the connector assembly, while the at least one second storage portion houses the fixing device.

According to an embodiment of the invention, the at least one second storage portion comprises a first compartment and a second compartment, the first compartment being created by folding a pair of opposite flaps, connected to a lateral wall of the box, towards the interior of the box and attaching the flaps to each other, the second compartment being created by folding another pair of opposite flaps, connected to a further lateral wall of the box, towards the interior of the box and attaching the flaps to each other. According to this embodiment of the invention, the first compartment is configured to house the fixing device while the second compartment is configured to house a fixing kit to fix the fixing device to the wall. Moreover, the box may comprise, on the further lateral wall, a further removable portion.

According to embodiments of the invention, the kit further comprises a container comprising an enclosure of a substantially circular shape configured to surround the connector assembly.

According to embodiments of the invention, the box is a cardboard box..

### Brief description of the drawings

Further characteristics and advantages will become more apparent by reading the following detailed description of an embodiment given as an example with reference to the accompanying drawings, wherein:
- Figure 1 schematically shows a fiber optic cable dispensing kit according to an embodiment of the present invention in a closed box;
- Figure 2 schematically shows the fiber optic cable dispensing kit of Figure 1 with a removable portion and a removable tab separated from the box;
- Figure 3 is a schematic top view of the fiber optic cable dispensing kit of Figure 1 with the box open;
- Figure 4 is a schematic top view of the fiber optic cable dispensing kit of Figure 2 with the box open;
- Figure 5 schematically shows a reel with a length of the fiber optic cable wound thereon and a connector assembly attached at an end of the fiber optic cable;
- Figure 6 schematically shows and exemplary fixing device;
- Figure 7 schematically shows a fiber optic cable dispensing kit according to another embodiment of the present invention in a closed box;
- Figure 8 schematically shows the fiber optic cable dispensing kit of Figure 7 with the box open;
- Figure 9 schematically shows a reel with a length of the fiber optic cable wound thereon and a connector assembly within an enclosure for the fiber optic cable dispensing kit of Figures 7 and 8;
- Figure 10 schematically further shows the reel and the connector assembly of Figure 9; and
- Figure 11 sows a layout of the box of the fiber optic dispensing kit of Figures 7 and 8.

### Detailed description of preferred embodiments of the invention

In the present description and claims, unless otherwise specified, all the numbers and values should be intended as preceded by the term "about". Also, all ranges include any combination of the maximum and minimum points disclosed and include any intermediate ranges therein, which may or may not be specifically enumerated herein.

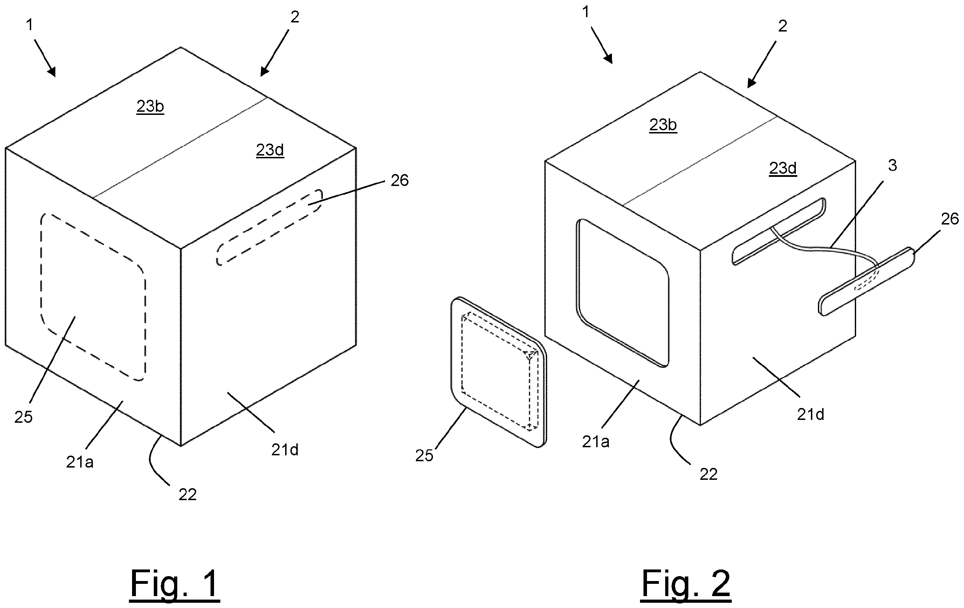

Figures 1-4 schematically show a fiber optic cable dispensing kit 1 according to an exemplary embodiment of the present invention. The fiber optic cable dispensing kit 1 according to the present invention comprises a box 2, for example made of cardboard, of a substantially cubic shape and configured to contain the following components:
- a length of a fiber optic cable 3 wound on a reel 4, e.g. a cardboard reel;
- a connector assembly 5 (e.g. a CTB) attached to an end of the fiber optic cable 3; and
- a fixing device 6 to fix the connector assembly 5 to a wall.

Optionally, the box may also include a fixing kit (not shown in the drawings) for the fixing device, the fixing kit comprising, for instance, screws and/or wall plugs.

The box 2 comprises a first lateral wall 21a, a second lateral wall 21b, a third lateral wall 21c, a fourth lateral wall 21d, a bottom wall 22 and four flaps 23a-23d to open/close the box. Each lateral wall 21a-21d is connected to a respective flap 23a-23d by means of a folding line. The box 2 also comprises an internal wall 24 in a fixed position. The internal wall 24 is attached to the opposing second and fourth lateral walls 21b, 21d of the box 2, e.g. by means of a glue.

Moreover, the box 2 comprises, in one of its lateral walls, a removable portion 25 which can have a substantially square shape and, in another lateral wall, a removable tab 26, for example of an elongated shape. In the box schematically shown in the Figures, the removable portion 25 is in the first lateral wall 21a, and the removable tab 26 is in the fourth lateral wall 21d. The removable portion 25 is substantially at the center of the first lateral wall 21a. Its dimensions substantially correspond to the dimensions of the fixing device 6, which, when the kit is assembled, is attached to said removable portion 25, as it will be described herein after. In particular, the area of the removable portion 25 is slightly larger than the area occupied by the fixing device 6, as schematically illustrated in Figure 2. The position of the removable tab 26 is shifted with respect to the center of the fourth lateral wall 21d, for instance it is shifted upwards close to the folding line, as schematically shown in Figures 1 and 2. Moreover, the longitudinal axis of the removable tab 26 is substantially parallel to the folding line. Removal of the second tab 26 leaves a slot in the fourth lateral wall 21d through which the fiber optic cable 3 can be spooled out directly from the box 2.

It is to be noticed that the presence of the removable tab 26 is optional. Indeed, the box 2 may comprise the slot described above without any tab covering it.

The box may have the following dimensions: 130x130x130 mm³, 140x140x140 mm³, or 190x190x190 mm³.

The length of the fiber optic cable 3 comprises a first end which is attached to the connector assembly 5 and a second end which may comprise a conventional pulling or pushing system for installation (not shown in the Figures). The length of the fiber optic cable 3 wound on the reel 4 may be, for instance, 30m or 50m or 100m. The fiber optic cable 3 may be, for example, any one of the following cables manufactured by the Applicant:
- LSOH (Low Smoke Zero Halogen) cable having a 4 mm nominal diameter and containing from one to four fibres Bendbright-XS (G.657.A2) in a 900 microns buffer;
- LSOH cable having a 2.7 mm maximum diameter and containing from one to four fibres Bendbright-XS (G.657.A2) in a 900 microns buffer;
- external cable type having a nominal diameter of 5 mm and containing from one to four fibres Bendbright-XS (G.657.A2) in a 900 microns buffer.

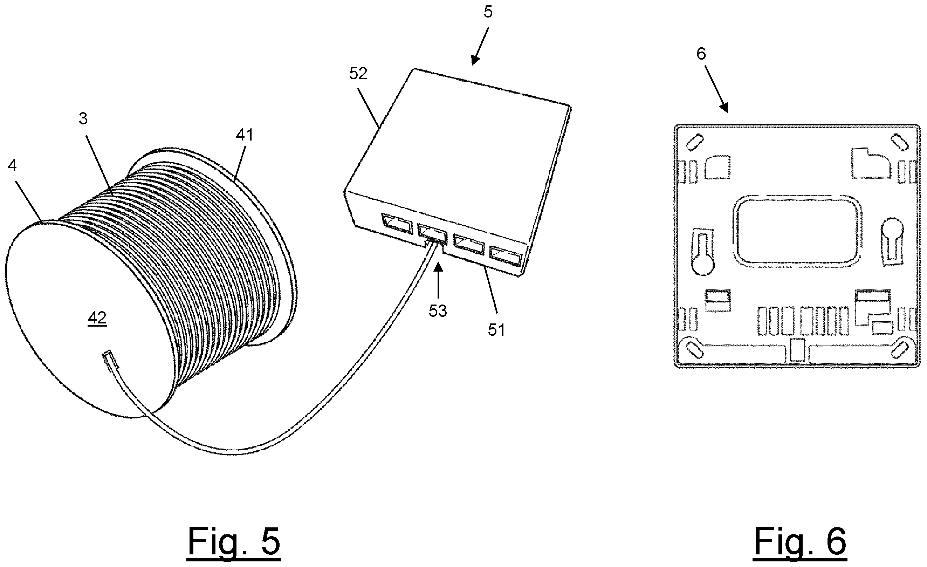

The reel 4 may have a cylindrical body and two flanges 41, 42, each flange being attached at a respective end of the cylindrical body. Each flange may have a substantially square shape or a substantially circular shape. The diameter of the cylindrical body is selected to be higher than the minimum bending radius of the considered cable. It is to be noticed that, typically, maintaining a bending radius which is more than 20% greater than the minimum bending radius is advantageous in relation to the winding process (because, for instance, it allows making a lower number of turns and the process is faster) and to reduce the memory effect. This effect derives from the cable remaining bent for a long time with changes in temperature, which typically leaves residual torsion in the cable. For example, the diameter of the cylindrical body of the reel 4 may be equal to 60 mm, which is suitable for fiber optic cables having a nominal diameter of about 3 mm or 4 mm. According to other examples, the diameter of the cylindrical body of the reel 4 may be equal to 100 mm, which is suitable for fiber optic cables having a nominal diameter of about 5 mm. The reel 4 can also have a groove (not shown in the drawings) on the edge of the flange 42 where the connector assembly 5 is attached when the kit is assembled, to allow the passage of the fiber optic cable that is connected to the connector assembly 5 and wound on the reel 4, as it will be described herein after. Alternatively, the flange 42 may comprise a hole (see Figure 5) for the passage of the fiber optic cable.

The connector assembly 5 is preferably a known CTB comprising SC/APC connectors, for instance the known Compact Termination Box MK3 (https://www.prysmiangroup.com/en/en_telecom-solutions_optical-connectivity_racks-and-rack-mounted_wall-mounted-racks_WM071-01.html). The connector assembly 5 is schematically shown in Figure 5. It may be configured to be fixed to a wall by means of the fixing device 6, or to be clipped on a DIN rail. The connector assembly 5 has a main body 51 and a removable cover 52 for accessing the connector assembly while mounted on the wall or on a DIN rail. The fiber optic cable is arranged inside the main body 51 of the connector assembly 5, may be routed outside along a track in the rear part of the main body (namely, the part which, upon installation, is attached to the fixing device or clipped to the DIN rail) and may exit the connector assembly 5 through a precut 53 on a lateral wall of the main body 51 of the connector assembly 5, as schematically shown in Figure 5. Exemplary dimensions (mm) of a connector assembly suitable to be assembled in the kit of the present invention are 80 x 80 x 28.

An exemplary fixing device 6 is schematically shown in Figure 6. The fixing device may be a wall bracket to be fixed to the wall by means of screws (which can be provided in the box together with the fixing device) or double-face adhesive strips. Fixing devices are known and will not be further described herein after.

According to the example schematically shown in the Figures, the internal wall 24 divides the volume of the box 2 in two storage portions. In particular, the box 2 encloses a first storage portion 27 and a second storage portion 28. The internal wall 24 has substantially the same shape of a lateral wall of the box 2, wherein each edge of the internal wall has a length that may vary by a maximum of 10% with respect to the nominal value of the box edges.

The dimensions of the first storage portion 27 of the box 2 substantially correspond to the dimensions of the group comprising the reel 4 with the fiber optic cable 3 wound on it and the connector assembly 5.

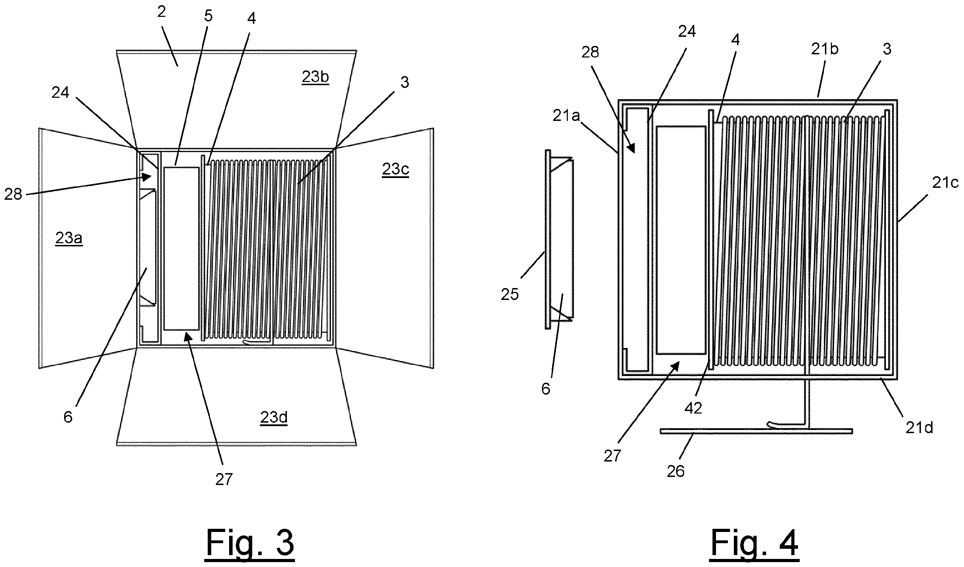

Indeed, when assembling the fiber optic cable dispensing kit 1 of the present invention, the reel 4 with the fiber optic cable 3 is positioned inside the first storage portion 27 of the box 2. The connector assembly 5, which is attached to the first end of the fiber optic cable 3 (as schematically shown in Figure 5), is fixed at a sidewall of the reel 4. In particular, one flange 41 of the reel 4 is positioned next to the inner surface of the third lateral wall 21c while the connector assembly 5 is fixed at the opposite flange 42 of the reel 4 (by means of, for instance, a glue, or other retaining elements). More in particular the connector assembly 5 is fixed at the outer side of the flange 42, i.e. the side of the flange 42 which is not in contact with the cylindrical body of the reel 4. Moreover, in particular, the connector assembly 5 is positioned inside the first storage portion 27 so that its rear part is fixed to the flange 42 and its cover is next the internal wall 24, as schematically shown in Figures 3 and 4). As already anticipated above, the flange 42 can have a groove or a hole (see Figure 5) for the passage of the fiber optic cable. The second end of the fiber optic cable 3 can be attached on the inner surface of the fourth lateral wall 21d at the position of the removable tab 26, as schematically shown in Figures 2 and 4, to ease the uncoiling operation during installation.

Further, the fixing device 6 is positioned in the second storage portion 28 of the box 2. As already anticipated above, the fixing device 6 can be attached on the inner surface of the first lateral wall 21a of the box 2. In particular, the fixing device 6 can be attached on the inner surface of said lateral wall at the position of the removable portion 25. The fixing device 6 can be attached to the removable portion 25 by means of suitable retaining elements, e.g. glue, adhesive tape, cable ties, etc.

During installation, removing the removable portion 25 leaves a window in the lateral wall and allows to take the fixing device 6 out of the box 2 without accessing the fiber optic cable and without disassembling the box 2. Removal of the removable tab 26 leaves a slot in the fourth lateral wall 21d through which the fiber optic cable 3 can be spooled out directly from the box 2, which is used as an unroller, as schematically shown in Figure 2.

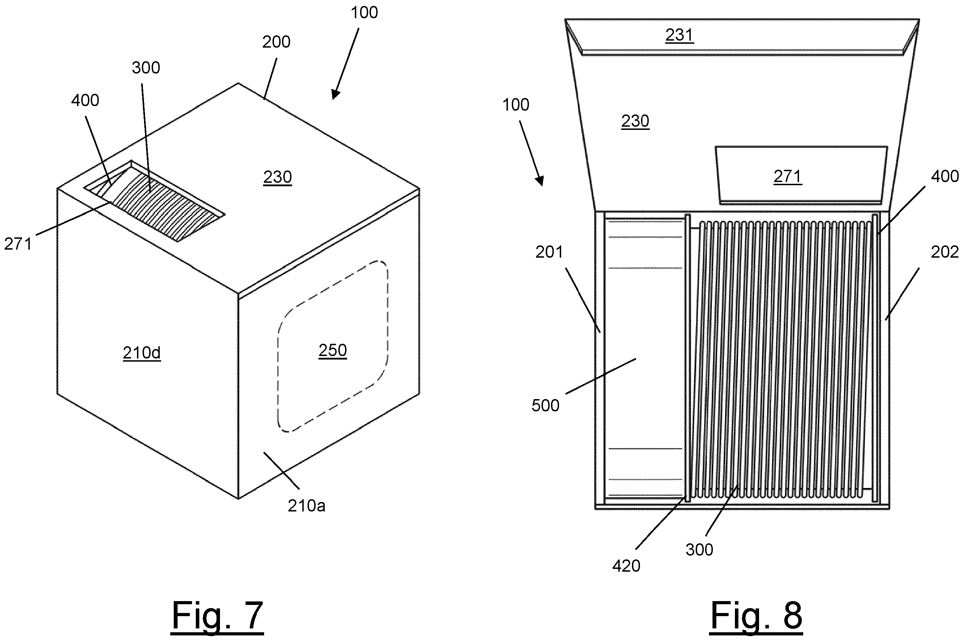

Figures 7-11 schematically show a fiber optic cable dispensing kit 100 according to another embodiment of the present invention.

According to this embodiment, the fiber optic cable dispensing kit 100 comprises a box 200, for example made of cardboard, of a substantially cubic shape and configured to contain the following components:
- a length of a fiber optic cable 300 wound on a reel 400, e.g. a cardboard reel;
- a connector assembly 500 (e.g. a CTB) attached to an end of the fiber optic cable 300; and
- a fixing device to fix the connector assembly 500 to a wall.

The box 200 also includes a fixing kit (not shown in the drawings) for the fixing device, the fixing kit comprising, for instance, screws and/or wall plugs.

The fiber optic cable 300, the connector assembly 500 and the fixing device are analogous to the corresponding components already described above with reference to the previous embodiment of the present invention. Also the reel 400 is similar to the corresponding component described above. It has a cylindrical body and two flanges 410, 420, each flange being attached at a respective end of the cylindrical body. In view of this, a detailed description of the fiber optic cable 300, the connector assembly 500, the reel 400 and the fixing device will be omitted.

The box 200 comprises a first lateral wall 210a, a second lateral wall 210b, a third lateral wall 210c, a fourth lateral wall 210d, a bottom wall 220 and a cover wall 230 to open/close the box. The cover wall 230 comprises, as schematically shown in the Figures, a closing tab 231.

The box 200 comprises a first storage portion housing the fiber optic cable 300, the connector assembly 500 and the reel 400, and secondary storage portions. In the embodiment of figures 7-8 and 11, the secondary storage portions include a first compartment 201 and a second compartment 202 located inside the box 200 at two opposite side thereof, each compartment delimited by one of the lateral walls of the box and an internal wall provided inside the box 200. In the kit according to this embodiment, the first compartment 201 is configured to house the fixing device (or, equivalently, the fixing kit) and the second compartment 202 is configured to house the fixing kit (or, equivalently, the fixing device).

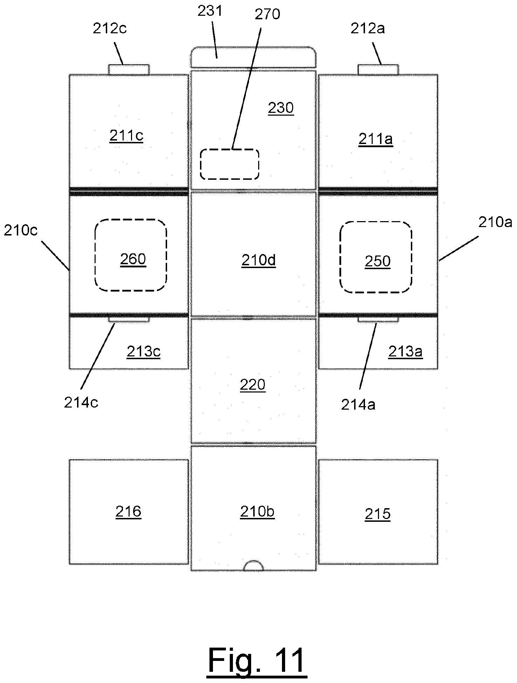

According to the embodiment shown in the Figures 7-8 and 11, the first compartment 201 and the second compartment 202 are each construed by folding a pair of opposite flaps toward the interior of the box and attaching the flaps to each other, as it will be described herein after. Folding the two opposite flaps forms the respective internal wall delimiting the compartment inside the box 200. In particular, as schematically shown in Figure 11, the first lateral wall 210a is connected, though a folding line along a first edge thereof, to the fourth lateral wall 210d. A second edge opposite to said first edge is free. A third edge of the first lateral wall 210a is connected, through a folding line, to a substantially square first flap 211a with a closing tab 212a- The first flap 211a has substantially the same shape of a lateral wall of the box 200, as shown in Figure 11. A fourth edge of the first lateral wall 210a is connected, through a folding line, to a second flap 213a having an elongated groove 214a at the middle of the folding line for receiving the closing tab 212a. Indeed, both the first flap 211a and the second flap 213a can be folded towards the interior of the box 200 substantially parallel to the first lateral wall 210a and can be attached to each other. In particular, the closing tab 212a can be inserted in the groove 214a in order to attach the first flap 211a and the second flap 213a together and to provide the first compartment 201. The first compartment 201 is hence provided inside the box and delimited by the first lateral wall 210a and the internal wall formed by the two flaps 211a and 213a (in particular, by the first flap 211a).

Analogously, the third lateral wall 210c is connected, though a folding line along a first edge thereof, to the fourth lateral wall 210d. A second edge opposite to said first edge is free. A third edge of the third lateral wall 210c is connected, through a folding line, to a substantially square first flap 211c with a closing tab 212c. The first flap 211c has substantially the same shape of a lateral wall of the box 200, as shown in Figure 11. A fourth edge of the third lateral wall 210c is connected, through a folding line, to a second flap 214c having an elongated groove 214c at the middle of the folding line for receiving the closing tab 212c. Indeed, both the first flap 211c and the second flap 213c can be folded towards the interior of the box 200 substantially parallel to the first lateral wall 210c and can be attached to each other. In particular, the closing tab 212c can be inserted in the groove 214c in order to attach the first flap 211c and the second flap 213c together and to provide the second compartment 202. The second compartment 202 is hence provided inside the box and delimited by the third lateral wall 210c and internal wall formed by the two flaps 211c and 213c (in particular, by the first flap 211c).

Moreover, the box 200 can comprise, in the first lateral wall 210a, a first removable portion 250 of, for example, a substantially square shape, and in the third lateral wall 210c a second removable portion 260 of, for example, a substantially square shape. Both the first and second removable portions 250, 260 can be located substantially at the center of the respective lateral wall. Within the first compartment 201, the fixing device 660 (or the fixing kit) may be attached to the first lateral wall 210a at the position of the first removable portion 250. Analogously, within the second compartment 202, the fixing kit (or the fixing device) may be attached to the third lateral wall 210c at the position of the second removable portion 260.

The box 200 can further comprise, on the cover wall 230, a removable tab 270, for example of an elongated shape. Removal of the tab 270 leaves a slot 271 in the cover wall 230 through which the fiber optic cable 300 can be spooled out directly from the box 200. It is to be noticed that the presence of the removable tab 270 is optional. Indeed, the box 200 may comprise the slot 271 described above without any tab covering it.

As schematically shown in Figure 11, the second lateral wall 210b is connected to the bottom wall 220 through a respective folding line along a fist edge thereof. A second edge opposite to this first edge is free. Further, optionally, the second lateral wall 210b may be connected, along a third edge and a fourth edge though respective folding lines, to a first additional wall 215 and a second additional wall 216. When the box 200 is assembled, the first additional wall 215 and the second additional wall 216 are folded towards the interior of the box 200 so that they are comprised inside the first compartment 201 and the second compartment 201, respectively. Each of the additional wall 215, 216 may be used as a support for attaching a respective one of the fixing device and the fixing kit thereto.

The box 200 may have the following dimensions: 130x130x130 mm³, 140x140x140 mm³, or 190x190x190 mm³.

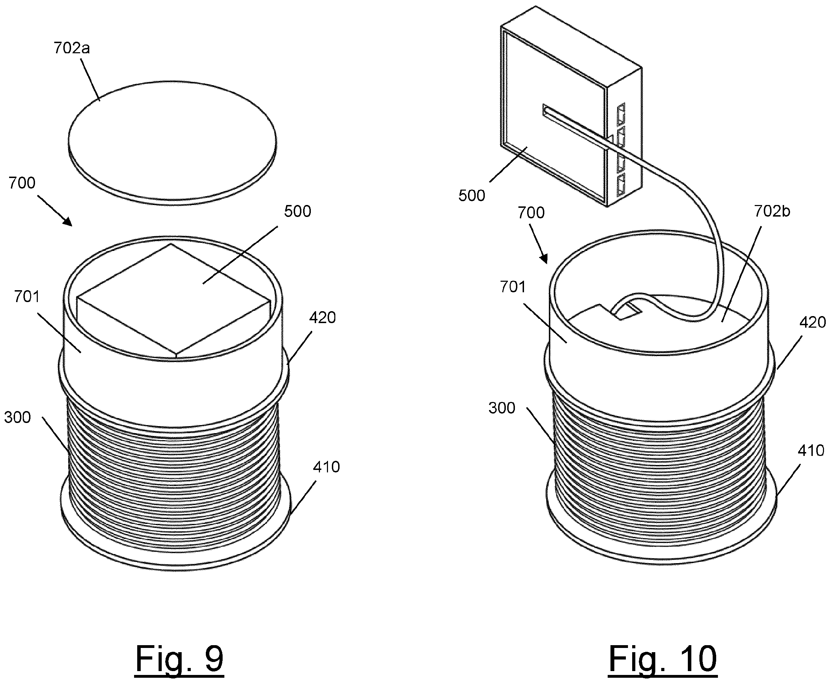

According to this embodiment, the fiber optic cable dispensing kit 100 further comprises a container 700 configured to house the connector assembly 500 when the kit 100 is assembled. The container 700 is schematically shown in Figures 9 and 10. The container 700 may be made of cardboard. The container 700 may be a standalone component comprising an enclosure 701 of a substantially circular shape configured to surround the connector assembly 500. As schematically shown in Figures 9 and 10, a cardboard strip may be folded to form the enclosure 701 surrounding the connector assembly 500. The container 700 may be open or closed. In particular, it may have two closing walls 702a, 702b of substantially circular shape for closing the enclosure 701 at both sides (see for example Figures 9 and 10). Each closing wall may be fixed to the enclosure 701 itself near to its edge. The container 700 may also be closed at only one side thereof by one closing wall.

The container 700 is configured to be associated with the reel 400. In particular, when the kit is assembled, the container 700 leans against (or is attached to) the flange 420 of the reel 400, more in particular the the outer side of the flange 420, within the box 200, as schematically shown in Figure 8. If the container 700 is closed at its side which leans against or is attached to the outer side of the flange 420, the closing wall may have a groove on its edge or a hole allowing the passage of the fiber optic cable which is connected to the connector assembly 500, as schematically shown in Figure 10.

According to a variant, the container 700 of the connector assembly may be a single body with the reel 400. In particular, in this case, the reel 400 may comprise, along the edge of the flange 420, a strip protruding in an opposite direction with respect to the cylindrical body of the reel 400 providing the enclosure as described above.

When assembling the fiber optic cable dispensing kit 100, the first compartment 201 and the second compartment 202 are created by folding the flaps 211a, 213a, 211c, 213c described above, and, possibly, the additional walls 215, 216 towards the interior of the box 200. Each of the fixing device and the fixing kit are positioned inside a respective compartment 201, 202 and are attached either to the inner surface of first and third lateral walls 210a, 210c or to the additional walls 215, 216 before folding the flaps 211a, 213a, 211c, 213c.

Then, the reel 400 with the fiber optic cable 300 is positioned inside the box 200. One flange 410 of the reel 400 is positioned next to the third lateral wall 210c. The connector assembly 500, which is attached to the first end of the fiber optic cable 300 (as schematically shown in Figure 10), is provided within the container 700 and positioned at the outer side of the opposite flange 420. The container 700 with the connector assembly 500 may lean against the outer wall of the flange 420 or it may be attached thereto. As already reported above, the flange 420, and, possibly, the closing wall of the container 700 leaning against (or attached to) the flange 420, can have a groove or a hole for the passage of the fiber optic cable, as schematically shown in Figure 10. The second end of the fiber optic cable 300 can be attached on the inner surface of the cover wall 230 at the position of the removable tab 270, to ease the uncoiling operation during installation

During installation, removing the first removable portion 250 leaves a window in the lateral wall and allows to take the fixing device (or the fixing kit) out of the first compartment 201 of the box 200 without accessing the fiber optic cable and without disassembling the box 200. Similarly, removal of the second removable portion 260 leaves a window in the lateral wall and allows to take the fixing kit (or the fixing device) out of the second compartment 202 of the box 200. Removal of the removable tab 270 leaves a slot in the cover wall 230 through which the fiber optic cable 300 can be spooled out directly from the box 200, which is used as an unroller.

The fiber optic cable dispensing kit of the disclosed embodiments of the present invention allows reducing the volume occupied by the cardboard box with respect to the known pre-terminated CTB MK3 kit cited above and increasing the number of kits per palette which can be stored and transported.

For instance, a cardboard box with dimensions 130x130x130 mm³ may contain a 50 m length of a fiber optic cable with nominal diameter of 2.7 mm or 4 mm, pre-terminated with the CTB and wound on a reel with diameter of 60 mm, together with the fixing device. In this case, the volume of the kit is equal to about 2.4 dm³. A known pre-terminated CTB MK3 kit with the same length of fiber optic cable, the CTB and the fixing device has a volume of about 4 dm³. Thus, the kit of the present invention allows saving about 40% of volume. The inventors found the number of kits that may be stored in a (standard) palette may thus increase by nearly 125%.

Another advantage of the kit according to the present invention is that it allows reducing the amount of packaging material to be disposed. Finally, it is to be noticed that it also allows uncoiling the fiber optic cable regardless of the relative position of the reel axis with respect to the plane on which the box is positioned. Indeed, considering the exemplary kit schematically shown in the Figures 1-6, upon installation, the kit may lean on its bottom wall, or alternatively on any of the second lateral wall or third lateral wall.

## Claims

1. A fiber optic cable dispensing kit (1; 100) comprising a box (2; 200) with a substantially cubic shape, the fiber optic cable dispensing kit (1; 100) further comprising, inside said box (2; 200):
- a fiber optic cable length (3; 300) wound on a reel (4; 400);
- a connector assembly (5; 500) attached to an end of the fiber optic cable (3; 300), the connector assembly (5; 500) being fixed at a sidewall of said reel (4, 400); and
- a fixing device (6) to fix the connector assembly (5; 500) to a wall.

2. The fiber optic cable dispensing kit (1; 100) of claim 1, wherein the reel (4; 400) comprises a cylindrical body and a flange (42; 420) attached to an end of said cylindrical body and wherein the connector assembly (5; 500) is fixed to said flange (42; 420), on the outer side thereof.

3. The fiber optic dispensing kit (1;100) according to claim 1 or 2, wherein the box (2;200) comprises, in one of its walls (21a; 210a), a removable portion (25; 250), the fixing device (6) being attached to said one of its wall (21a; 210a) on an inner surface thereof at the position of said removable portion (25; 250).

4. The fiber optic dispensing kit (1;100), according to any one of the preceding claims, wherein the box (2; 200) comprises, in one of its walls (21d; 230), a slot (271) through which the fiber optic cable (3; 300) can be spooled out directly from the box (2; 200).

5. The fiber optic cable dispensing kit (1; 100) according to claim 4, wherein the box (2; 200) comprises, in said one of its walls (21d; 230), a removable tab (26; 270) whose removal leaves said slot in said one of its walls (21d; 230), and wherein a second end of the fiber optic cable (3; 300) is attached on an inner surface of said one of its walls (21d; 230) at the position of said removable tab (26; 270).

6. The fiber optic cable dispensing kit (1) according to any one of the preceding claims, wherein the reel (4; 400) has a hole or a groove on the edge of said flange (42; 420) to allow the passage of the fiber optic cable (3; 300) that is connected to the connector assembly (5; 500).

7. The fiber optic dispensing kit (1), according to any one of the preceding claims, wherein the box (2) encloses a first storage portion (27) and at least one second storage portion (28; 201, 202) divided by at least one internal wall (24; 211a, 211c) having substantially the same shape of a lateral wall of the box, and wherein said first storage portion (27) houses said fiber optic cable length (3; 300) wound on said reel (4; 400) and said connector assembly (5; 500), while said at least one second storage portion (28; 201, 202) houses said fixing device (6).

8. The fiber optic cable dispensing kit (100) according to claim 7, wherein the at least one second storage portion (201, 202) comprises a first compartment (201) and a second compartment (202), the first compartment (201) being created by folding a pair of opposite flaps (211a, 213a), connected to a lateral wall (210a) of said box (200), towards the interior of said box (200) and attaching said flaps to each other, the second compartment (202) being created by folding another pair of opposite flaps (211c, 213c), connected to a further lateral wall (210c) of said box (200), towards the interior of said box (200) and attaching said flaps to each other, wherein said first compartment (201) is configured to house said fixing device.

9. The fiber optic cable dispensing kit (100) according to claim 8, wherein said second compartment (202) is configured to house a fixing kit to fix said fixing device to the wall.

10. The fiber optic cable dispensing kit (100) according to claim 9, wherein the box (200) comprises, on said further lateral wall (210c), a further removable portion (260).

11. The fiber optic cable dispensing kit (100) according to any one of the preceding claims, wherein it further comprises a container (700) comprising an enclosure (701) of a substantially circular shape configured to surround the connector assembly (500).

12. The fiber optic cable dispensing kit (100) according to any one of the preceding claims, wherein said box (2; 200) is a cardboard box.
